# EUROPEAN PATENT APPLICATION

(11) **EP 4 832 331 A1**
(43) Date of publication of application: **28.10.2026**
(21) Application number: 24916702.4
(22) Date of filing: 20.12.2024
(51) Int. Cl.: H02M 7/00, H02M 7/5387, H02M 1/00, H02M 1/088

(54) **INVERTER**

(30) Priority: 10.01.2024 CN 202410046690
(71) Applicant: Huawei Digital Power Technologies Co., Ltd., Shenzhen, Guangdong 518043 (CN)
(72) Inventor: XIE, Yang, Shenzhen, Guangdong 518043 (CN)
(74) Representative: Isarpatent
(86) International application number: PCT/CN2024/140923
(87) International publication number: WO 2025/148655

(57) **Abstract**

This application provides an inverter, including an inverter circuit module and a printed circuit board PCB. The inverter circuit module forms an inverter circuit through a trace on the PCB, a first end of the inverter circuit is configured to connect to a direct current power supply, and a second end of the inverter circuit is configured to connect to an alternating current power grid and/or a load. The inverter circuit module includes a plurality of inverter leg modules and a plurality of filter capacitor modules, the inverter leg module includes at least four switching transistors, and the filter capacitor module includes at least one capacitor. The plurality of filter capacitor modules are sequentially disposed on the PCB in a first direction, and at least one inverter leg module is disposed between any two filter capacitor modules. The inverter provided in this application can improve effect of absorbing a voltage peak from the switching transistor in the inverter leg module.

## Description

This application claims priority to Chinese Patent Application No. 202410046690.8, filed with the China National Intellectual Property Administration on January 10, 2024 and entitled "INVERTER", which is incorporated herein by reference in its entirety.

### TECHNICAL FIELD

This application relates to the field of power electronics, and in particular, to an inverter.

### BACKGROUND

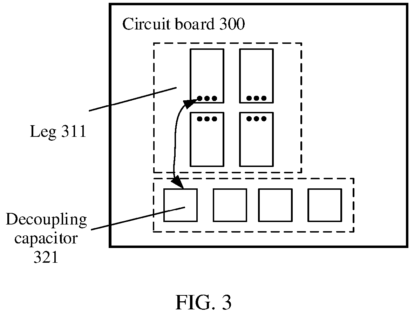

With rapid development of energy and photovoltaic industries, and the like, power of a high-power inverter continuously increases, which poses a new requirement on the existing inverter. Parasitic inductance parameters of power modules of most existing commercial inverters are large. Therefore, a switching transistor withstands a large voltage peak when being turned off at a high speed, and large oscillation occurs in a switching transient state. To meet a voltage stress derating requirement, a decoupling capacitor is usually disposed to absorb a voltage peak of a switching transistor, so as to reduce a voltage stress. However, the switching transistor and the decoupling capacitor are usually centrally disposed in different regions, which increases a trace distance between the switching transistor and the decoupling capacitor (as shown in FIG. 3, a long lead distance is required for connecting the switching transistor in a leg 311 to the corresponding decoupling capacitor 321), thereby reducing effect of absorbing the voltage peak from the switching transistor by the decoupling capacitor.

### SUMMARY

This application provides an inverter, to improve effect of absorbing a voltage peak from a switching transistor in an inverter leg module.

According to a first aspect, this application provides an inverter. The inverter provided in this application includes an inverter circuit module and a printed circuit board PCB. The inverter circuit module forms an inverter circuit through a trace on the PCB. A first end of the inverter circuit is configured to connect to a direct current power supply, and a second end of the inverter circuit is configured to connect to an alternating current power grid and/or a load. The inverter circuit module includes a plurality of inverter leg modules and a plurality of filter capacitor modules, the inverter leg module includes at least four switching transistors, and the filter capacitor module includes at least one capacitor. The plurality of filter capacitor modules are sequentially disposed on the PCB in a first direction, and at least one inverter leg module is disposed between any two filter capacitor modules.

According to the inverter provided in embodiments of this application, the inverter leg module is disposed between any two filter capacitor modules, so that a trace distance between the inverter leg module and the filter capacitor module can be shortened, parasitic inductance on the trace between the inverter leg module and the filter capacitor module can be reduced, thereby improving effect in which the filter capacitor module absorbs a voltage peak of the switching transistor in the inverter leg module.

It should be understood that a structure of the inverter provided in embodiments of this application is applicable to a device having a power conversion function, for example, an inverter device like a photovoltaic inverter or a power conversion system (power conversion system, PCS). This is not limited in embodiments of this application.

Specifically, the switching transistor of the inverter leg module includes a metal-oxide-semiconductor field-effect transistor MOSFET, an insulated gate bipolar transistor IGBT, and the like.

With reference to the first aspect, in some implementations of the first aspect, a quantity of the plurality of filter capacitor modules is one more than a quantity of the plurality of inverter leg modules, and the plurality of filter capacitor modules and the plurality of inverter leg modules are sequentially alternately disposed in the first direction.

According to the inverter provided in embodiments of this application, the plurality of filter capacitor modules and the plurality of inverter leg modules are sequentially alternately disposed, and the quantity of the plurality of filter capacitor modules is one greater than the quantity of the plurality of inverter leg modules, filter capacitor modules may be correspondingly disposed on two sides of each inverter leg module. This can improve effect in which the filter capacitor module absorbs a voltage peak generated when the switching transistor in the inverter leg module is rapidly turned off.

With reference to the first aspect, in some implementations of the first aspect, the filter capacitor module includes a first capacitor unit, and the inverter leg module includes two first switching transistors and two second switching transistors. First capacitor units of the plurality of filter capacitor modules are distributed at an equal spacing along a first distribution straight line in the first direction. The two first switching transistors in the inverter leg module and first capacitor units in two adjacent filter capacitor modules are distributed at an equal spacing in the first direction, and the two second switching transistors in the inverter leg module and first capacitor units in the two adjacent filter capacitor modules are distributed at an equal spacing in the first direction. The two first switching transistors and the two second switching transistors are symmetrically distributed along the first distribution straight line.

According to the inverter provided in embodiments of this application, the first capacitor units in the plurality of filter capacitor modules are distributed at an equal spacing, and some switching transistors in the inverter leg module and the first capacitor units in the two adjacent filter capacitor modules are distributed at an equal spacing, so that the two adjacent filter capacitor modules can provide same decoupling effect for the inverter leg module. In addition, some switching transistors in the inverter leg module and the other switching transistors are symmetrically distributed along the distribution straight line of the plurality of filter capacitor modules, so that space occupied by the plurality of switching transistors in the inverter leg module in the first direction can be reduced, trace distances between the two adjacent filter capacitor modules and the plurality of switching transistors in the inverter leg module can be shorter, parasitic inductance on the trace between the switching transistors in the inverter leg module and the corresponding filter capacitor modules can be reduced, thereby improving effect of absorbing a voltage peak from the switching transistor in the inverter leg module.

With reference to the first aspect, in some implementations of the first aspect, the first capacitor unit includes a first capacitor, and the two first switching transistors in the inverter leg module and first capacitors in the two adjacent filter capacitor modules are distributed at an equal spacing in the first direction; and the two second switching transistors in the inverter leg module and the first capacitors in the two adjacent filter capacitor modules are distributed at an equal spacing in the first direction. The first capacitor includes an upper boundary and a lower boundary in a second direction, the upper boundary and the lower boundary of the first capacitor are parallel to the first distribution straight line, at least a part of the inverter leg module is located between extension lines on which the upper boundary and the lower boundary of the first capacitor are respectively located, and the first direction is perpendicular to the second direction.

According to the inverter provided in embodiments of this application, the at least a part of the inverter leg module is disposed between the extension lines on which the upper boundary and the lower boundary of the first capacitors of the two filter capacitor modules adjacent to the inverter leg module are respectively located, so that trace distances between the plurality of switching transistors in the inverter leg module and the two adjacent filter capacitor modules can be further shortened, parasitic inductance on the trace between the switching transistors in the inverter leg module and the filter capacitor modules can be reduced, thereby improving effect in which the filter capacitor module absorbs a voltage peak generated when the switching transistor is rapidly turned off.

Optionally, upper boundaries of first capacitors in the plurality of filter capacitor modules are located on a first upper boundary line, lower boundaries of the first capacitors in the plurality of filter capacitor modules are located on a first lower boundary line, the first upper boundary line and the first lower boundary line are parallel to the first distribution straight line, and the at least a part of the inverter leg module is located between the first upper boundary line and the first lower boundary line.

With reference to the first aspect, in some implementations of the first aspect, each switching transistor in the inverter leg module includes a pin, pins of the two first switching transistors and the two second switching transistors are located between the extension lines on which the upper boundary and the lower boundary of the first capacitor are respectively located.

According to the inverter provided in embodiments of this application, the pins of the switching transistors in the inverter leg module are disposed in a specific range between the upper boundary and the lower boundary of the first capacitors in the two adjacent filter capacitor modules, and a trace distance between the switching transistors in the inverter leg module and the filter capacitor module can be further reduced.

With reference to the first aspect, in some implementations of the first aspect, the first capacitor unit includes a second capacitor and a third capacitor. The two first switching transistors in the inverter leg module and second capacitors in the two adjacent filter capacitor modules are distributed at an equal spacing in the first direction, and the two second switching transistors in the inverter leg module and third capacitors in the two adjacent filter capacitor modules are distributed at an equal spacing in the first direction. The second capacitor and the third capacitor each include an upper boundary and a lower boundary in a second direction, upper boundaries and lower boundaries of the second capacitor and the third capacitor are parallel to the first distribution straight line, at least a part of the two first switching transistors are located between extension lines on which an upper boundary and a lower boundary of the second capacitor are respectively located, at least a part of the two second switching transistors are located between extension lines on which an upper boundary and a lower boundary of the third capacitor are respectively located, and the first direction is perpendicular to the second direction.

According to the inverter provided in embodiments of this application, for two groups of switching transistors that are symmetrically distributed along the first distribution straight line in the inverter leg module, at least a part of one group of switching transistors is confined between extension lines on which the upper boundary and the lower boundary of the second capacitor are respectively located, and at least a part of the other group of switching transistors is limited between the extension lines on which the upper boundary and the lower boundary of the third capacitor are respectively located, so that a trace distance between the switching transistors in the inverter leg module and the corresponding capacitors can be further reduced.

Optionally, upper boundaries of second capacitors in the plurality of filter capacitor modules are located on a second upper boundary line, lower boundaries of the second capacitors in the plurality of filter capacitor modules are located on a second lower boundary line, upper boundaries of third capacitors in the plurality of filter capacitor modules are located on a third upper boundary line, lower boundaries of the third capacitors in the plurality of filter capacitor modules are located on a third lower boundary line, and the second upper boundary line, the second lower boundary line, the third upper boundary line, and the third lower boundary line are parallel to the first distribution straight line, and at least a part of the inverter leg module is located between the second upper boundary line and the third lower boundary line.

Specifically, at least a part of the two first switching transistors is located between the second upper boundary line and the second lower boundary line, and at least a part of the two second switching transistors is located between the third upper boundary line and the third lower boundary line.

With reference to the first aspect, in some implementations of the first aspect, each switching transistor in the inverter leg module includes a pin, pins of the two first switching transistors are located between the extension lines on which the upper boundary and the lower boundary of the second capacitor are respectively located, and pins of the two second switching transistors are located between the extension lines on which the upper boundary and the lower boundary of the third capacitor are respectively located.

With reference to the first aspect, in some implementations of the first aspect, the capacitor in the filter capacitor module includes a first pin and a second pin that are respectively disposed at two ends of the capacitor, and the first pin and the second pin are arranged in the second direction.

According to the inverter provided in embodiments of this application, the two pins of the capacitor are respectively disposed at the two ends of the capacitor in the second direction, and distances between the two pins of the capacitor and the corresponding inverter leg modules are the same, so that a distance between the two pins of the capacitor and the corresponding inverter leg modules can be further reduced.

With reference to the first aspect, in some implementations of the first aspect, the filter capacitor module includes a plurality of capacitors, and a connection manner of the plurality of capacitors includes series connection, parallel connection, or a combination of the series connection and the parallel connection.

With reference to the first aspect, in some implementations of the first aspect, the capacitor is a film capacitor.

### BRIEF DESCRIPTION OF DRAWINGS

FIG. 1 is a diagram of a scenario of a photovoltaic power generation system according to this application;
FIG. 2 is a diagram of a scenario of an electric power system according to this application;
FIG. 3 shows a trace manner of a conventional power module;
FIG. 4 is a diagram of a layout of a circuit board 400 according to this application;
FIG. 5 is a diagram of a layout of a circuit board 500 according to this application;
FIG. 6 is a diagram of a layout of a circuit board 600 according to this application;
FIG. 7 is a schematic of a circuit of a photovoltaic inverter according to this application;
FIG. 8 is a schematic of a circuit of another photovoltaic inverter according to this application; and
FIG. 9 is a schematic of a filter capacitor module circuit according to an embodiment of this application.

### DESCRIPTION OF EMBODIMENTS

The following describes technical solutions of this application with reference to accompanying drawings.

In descriptions of embodiments of this application, "/" means "or" unless otherwise specified. For example, A/B may indicate A or B. In this specification, "and/or" merely describes an association relationship between associated objects and indicates that three relationships may exist. For example, A and/or B may indicate the following three cases: Only A exists, both A and B exist, and only B exists. In the accompanying drawings, same or similar reference numerals indicate same or similar elements or elements having same or similar functions. The following embodiments described with reference to the accompanying drawings are examples, and are merely intended to explain this application, but should not be construed as a limitation on this application.

The terms "first", "second", "third", "fourth", and the like (if any) in this application are intended to distinguish between similar objects but do not necessarily indicate a specific order or sequence. It should be understood that the data termed in such a way are interchangeable in proper circumstances so that embodiments of this application described herein can be implemented in other orders than the order illustrated or described herein. Sequence numbers of the following processes do not mean an execution sequence. The execution sequence of the processes should be determined based on functions and internal logic of the processes, and shall not constitute any limitation on an implementation process of embodiments of this application. For example, in embodiments of this application, words such as "110", "210", and "220" are merely identifiers for ease of description, and do not limit an apparatus.

Reference to "some embodiments" or the like described in this specification indicates that one or more embodiments of this application include a specific feature, structure, or characteristic described with reference to embodiments. Therefore, statements such as "in some embodiments" that appear at different places in this specification do not necessarily mean referring to a same embodiment, but mean "one or more but not all of embodiments", unless otherwise specifically emphasized in another manner. The terms "include", "comprise", "have", and variants thereof all mean "include but are not limited to", unless otherwise specifically emphasized in another manner.

The terms used in embodiments of this disclosure are merely for the purpose of describing specific embodiments, but are not intended to limit embodiments of this disclosure. Terms "a" and "the" in singular forms in embodiments of this disclosure and the appended claims are also intended to include plural forms, unless otherwise stated in the context clearly. It should also be understood that, the term "and/or" used herein indicates and includes any or all possible combinations of one or more associated listed items.

It should be noted that, in embodiments of this application, "connection" means an electrical connection, and a connection between two electrical elements may be a direct or indirect connection between the two electrical elements. For example, that A is connected to B may be that A is directly connected to B, or may be that A is indirectly connected to B via one or more other electrical elements. For example, that A is connected to B may alternatively be that A is directly connected to C, and C is directly connected to B, so that A is connected to B through C.

An application scenario of this application is first described. An inverter provided in this application is applicable to a plurality of application fields such as energy storage and electric power fields, the photovoltaic power generation field, the new energy intelligent microgrid field, and the power transmission and distribution field. A structure of the inverter provided in this embodiment of this application is applicable to a device having a power conversion function, for example, an inverter device like a photovoltaic inverter or a power conversion system (power conversion system, PCS). The inverter provided in embodiments of this application is applicable to different application scenarios such as an energy storage and power supply scenario, a photovoltaic power supply scenario, a photovoltaic storage hybrid power supply scenario, and an uninterruptible power supply (Uninterrupted Power Supply, UPS) power supply scenario. This is not limited in embodiments of this application. The following uses the energy storage and power supply scenario and the photovoltaic power generation scenario as an example for description.

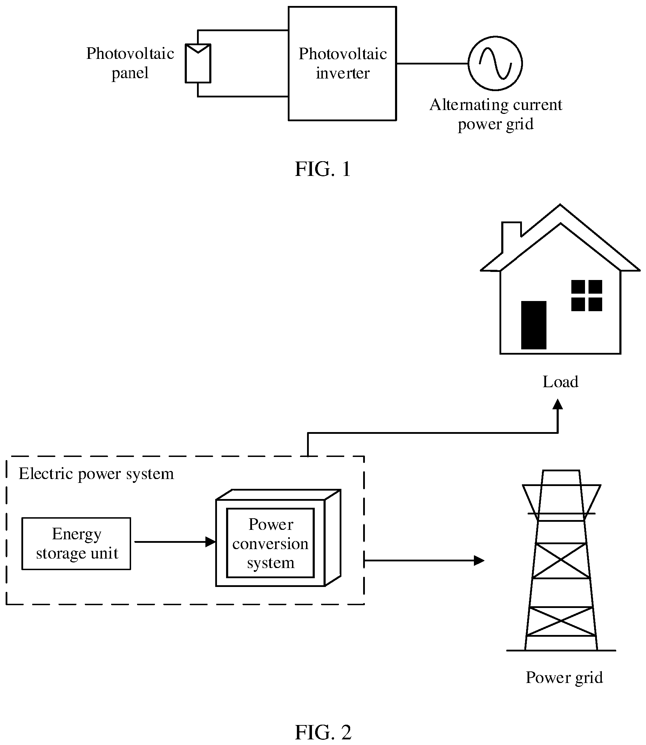

An embodiment of this application provides a photovoltaic power generation system, as shown in FIG. 1. The photovoltaic power generation system provided in this application includes a photovoltaic panel, a controller, and an inverter provided in this application. The photovoltaic panel is configured to convert solar energy into direct current electric energy. The inverter is configured to convert a direct current into an alternating current. The controller is configured to control operating of the photovoltaic panel and control operating of the inverter.

The inverter provided in this application may be a photovoltaic inverter. An output port of the photovoltaic panel is connected to an input port of the photovoltaic inverter. The output port of the photovoltaic inverter is configured to connect to an input end of a power grid. The photovoltaic panel is configured to generate a direct current. The photovoltaic inverter is configured to: invert the direct current, and input an alternating current obtained through inversion to the power grid.

It should be understood that the photovoltaic panel is a device that directly converts solar energy into electric energy through photovoltaic (photovoltaic) effect produced by a semiconductor material in a light condition. The photovoltaic panel may be a photovoltaic module, and may also be referred to as a photovoltaic array or a solar panel.

To rectify the direct current generated by the photovoltaic panel, a rectifier may be further disposed in the photovoltaic power generation system. The rectifier is connected between the output port of the photovoltaic module and the input port of the photovoltaic inverter. The rectifier is configured to rectify the direct current generated by the photovoltaic module, and input a direct current obtained after rectification into the photovoltaic inverter.

It should be understood that, in addition to the photovoltaic power generation system provided in this application, the structure of the inverter provided in this application may be further applied to another power conversion device for power generation or power conversion.

FIG. 2 is a diagram of an energy storage and power supply scenario of an electric power system according to this application.

FIG. 2 is a diagram of an application scenario of an electric power system according to this application. In an energy storage and power supply scenario, the electric power system may include an energy storage unit and at least one inverter provided in this application. The inverter provided in this application may be a power conversion system.

The energy storage unit is electrically connected to a load and/or a power grid via a power conversion system. An input end of the power conversion system is connected to the energy storage unit, for example, an energy storage cell string. An output end of the power conversion system is connected to the power grid or the load, for example, a household device.

Optionally, in the energy storage and power supply scenario, a plurality of power conversion systems and a plurality of energy storage units may be included. An input end of one power conversion system is connected to one energy storage unit, and input ends of the plurality of power conversion systems are connected in parallel. The energy storage unit herein may include at least one battery cluster, all battery clusters are connected in parallel, and one battery cluster may be formed by a plurality of battery strings connected in series. The battery string may be one battery pack, and one battery pack may include one or more battery units (a voltage of the battery unit usually falls between 2.5 V and 4.2 V) connected in series and parallel, to form a minimum energy storage and management unit.

After the electric power system starts to run, the power conversion system may invert a direct current in an energy storage unit connected to the input end of the power conversion system to an alternating current, to supply power to various types of power-consuming devices such as the alternating current power grid or an alternating load (for example, a home appliance).

In some embodiments, a power conversion circuit in the power conversion system is a bidirectional conversion circuit, and can implement charging or discharging of the energy storage unit. The power conversion circuit is configured to bidirectionally convert a direct current of the energy storage unit and an alternating current of the alternating current power grid and/or the load. For example, the power conversion circuit is configured to convert the direct current of the energy storage unit into the alternating current and transmit the alternating current to the load, where the load may be a power-consuming device. Alternatively, after the alternating current is converted into the direct current, the direct current is transmitted to the energy storage unit for storage.

Currently, with rapid development of energy and photovoltaic industries, and the like, power of a high-power inverter continuously increases. This poses a new requirement on the existing inverter. Parasitic inductance parameters of power modules of most existing commercial inverters are large. Therefore, a switching transistor withstands a large voltage peak when being turned off at a high speed, and large oscillation occurs in a switching transient state. To meet a voltage stress derating requirement, a decoupling capacitor (decoupling capacitor) is usually disposed to absorb a voltage peak of a switching transistor, so as to reduce voltage stress. The decoupling capacitor is a passive element used to reduce electromagnetic interference between different parts. In a digital and analog hybrid circuit, the decoupling capacitor can prevent a highfrequency signal from being transmitted from one region to another region, and provide a necessary voltage regulation function.

However, the switching transistor and the decoupling capacitor are usually centrally disposed in different regions, which increases a trace distance between the switching transistor and the decoupling capacitor (as shown in FIG. 3, a long lead distance is required for connecting the switching transistor in the leg 311 to the corresponding decoupling capacitor 321). As the trace distance increases, the parasitic inductance generated in the line increases accordingly, reducing effect of absorbing the voltage peak of the switching transistor by the decoupling capacitor.

In view of this, an embodiment of this application provides an inverter, to improve effect of absorbing a voltage peak from a switching transistor in an inverter leg module.

The inverter provided in this embodiment of this application includes an inverter circuit module and a printed circuit board (printed circuit board, PCB). The inverter circuit module forms an inverter circuit through a trace on the PCB. A first end of the inverter circuit is configured to connect to a direct current power supply, and a second end of the inverter circuit is configured to connect to an alternating current power grid and/or a load.

It should be understood that the inverter provided in this application may be a photovoltaic inverter in a photovoltaic system or a power conversion system in an energy storage system. For example, when the inverter is the photovoltaic inverter, the first end of the inverter circuit may be connected to a direct current input circuit at an end of a photovoltaic panel, and a second end of the inverter circuit may be connected to the load and/or an alternating current output circuit at an end of the power grid.

The PCB may be a printed circuit board. The printed circuit board is a support body of an electronic element, and also serves as a carrier for electrical connection of the electronic element. The printed circuit board has a function of supporting and interconnecting circuit elements. The electronic element includes but is not limited to a capacitor, an inductor, a resistor, a processor, a memory, an antenna, and the like. Generally, a printed circuit board on which an electronic element is soldered may also be referred to as a printed circuit board assembly (printed circuit board assembly, PCBA).

Electronic elements carried on the printed circuit board may form a plurality of functional modules to implement corresponding functions. For example, the inverter circuit is configured to convert a direct current into an alternating current, and a rectifier circuit is configured to convert an alternating current into a direct current. A shape of the printed circuit board may be correspondingly designed based on a shape of an electronic device, and locations, shapes, and the like of functional modules to be disposed in the electronic device.

In this embodiment of this application, the inverter circuit module includes a plurality of inverter leg modules and a plurality of filter capacitor modules, the inverter leg module includes at least four switching transistors, and the filter capacitor module includes at least one capacitor. The plurality of filter capacitor modules are sequentially disposed on the PCB in a first direction, and at least one inverter leg module is disposed between any two filter capacitor modules.

It should be understood that the inverter leg module in the inverter circuit module may include an upper leg and a lower leg, and each inverter leg module includes a plurality of switching transistors, for example, at least four switching transistors. The upper leg and the lower leg are two circuit branches including a switch pair. In an application scenario like direct current-to-alternating current conversion (DC-AC) or alternating current-to-direct current conversion (AC-DC), the two circuit branches are usually referred to as a "half bridge", a "full bridge", or a "three-phase bridge", and are configured to control, adjust, and convert electric energy. Specifically, the upper leg generally includes an input end, an output end, and a switch pair. A source of the switch pair is connected to a forward power supply or a signal source, and a drain is connected to the load. The lower leg also has a similar structure, except that a drain of a switch pair of the lower leg is connected to a forward power supply or a signal source, and a source is connected to the load. The two switches are driven to control output waveform and manage operation of the inverter.

In some embodiments, a capacitor in the filter capacitor module is a film capacitor.

In some embodiments, electrical elements such as the inverter leg module, the filter capacitor module, a power inductor, and a bus capacitor that are installed on the PCB may be connected to the PCB through pins. During specific implementation, the pin may be made of copper or another conductive metal material. In a possible specific implementation, the pin may be formed into a plurality of shapes through bending, to be applicable to a plurality of assembly manners, for example, through insertion or surface mounting on the PCB.

Optionally, atomic-level bonding is implemented between a ground pin of the electrical element and a metallization layer on the surface of the PCB by using a metal ultrasonic bonding technology.

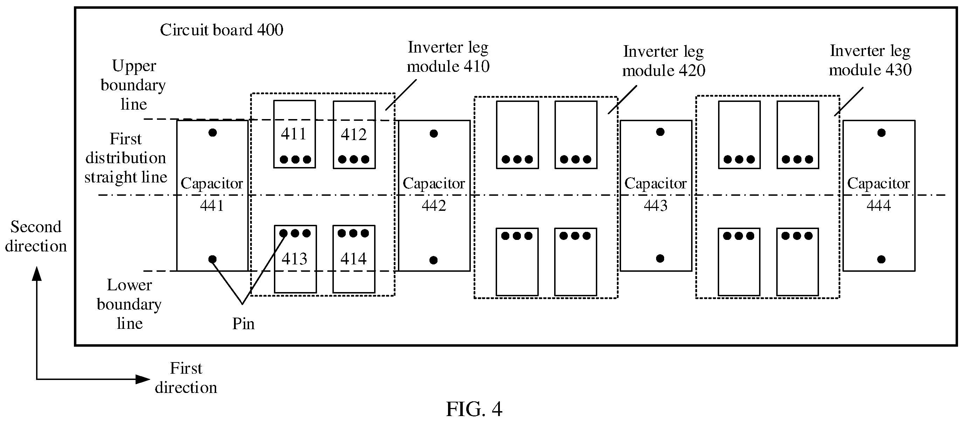

The following describes in detail possible structures and layouts of an inverter leg module and a filter capacitor module on a PCB in an inverter in embodiments of this application with reference to FIG. 4 to FIG. 6. It should be understood that the examples in FIG. 4 to FIG. 6 are merely intended to help a person skilled in the art understand embodiments of this application, but are not intended to limit embodiments of this application to specific structures or specific scenarios in the examples in FIG. 4 to FIG. 6. It is clear that a person skilled in the art can make various equivalent modifications or changes based on the provided examples, and such modifications and changes also fall within the scope of embodiments of this application.

FIG. 4 is a diagram of a layout of a circuit board 400 according to this application.

As shown in FIG. 4, a plurality of inverter leg modules and a plurality of filter capacitor modules are disposed on the circuit board 400. An inverter leg module includes at least four switching transistors, and a filter capacitor module includes at least one capacitor.

Specifically, the plurality of inverter leg modules include an inverter leg module 410, an inverter leg module 420, and an inverter leg module 430. The plurality of filter capacitor modules include a capacitor 441, a capacitor 442, a capacitor 443, and a capacitor 444.

In this embodiment of this application, the plurality of filter capacitor modules are sequentially disposed on the PCB in a first direction, and at least one inverter leg module is disposed between any two filter capacitor modules.

It should be understood that, in this embodiment of this application, an example in which a horizontal direction is used as the first direction and a vertical direction is used as a second direction is used for description.

For example, the inverter leg module 410 is disposed between the capacitor 441 and the capacitor 442, and the inverter leg module 410 and the inverter leg module 420 are disposed between the capacitor 441 and the capacitor 443.

In some embodiments, a switching transistor in the inverter leg module may be a giant transistor (giant transistor, GTR), a metal-oxide-semiconductor field-effect transistor (metal-oxide-semiconductor field-effect transistor, MOSFET), an insulated gate bipolar transistor (insulated gate bipolar transistor, IGBT), a gate turn-off thyristor (gate turn-off thyristor, GTO), or another suitable device.

It should be understood that the capacitor is a decoupling capacitor. In an optional embodiment, the capacitor may be a film capacitor, and a material includes a material like ceramic or polymer aluminum. Optionally, the decoupling capacitor may meet space limitation and performance requirements through a structure design like a laminated structure or a winding structure. Specifically, the winding type is a structure in which a polymer film is wound and stamped, and then the polymer film is loaded into a housing. The laminated structure is a structure in which a plurality of layers of polymer films are stacked together, and then a laminated body is loaded into a housing. A dielectric of the decoupling capacitor may be made of various polymer materials such as polypropylene (polypropylene, PP) and polyester terephthalate (polyethylene terephthalate, PET).

For example, to ensure sufficient dynamic decoupling effect, a total capacitance of the decoupling capacitor may be at least 50 times the total parasitic output capacitance of the corresponding leg switching transistor.

In some embodiments, the filter capacitor module may include a plurality of capacitors, and a connection manner of the plurality of capacitors includes series connection, parallel connection, or a combination of series connection and parallel connection.

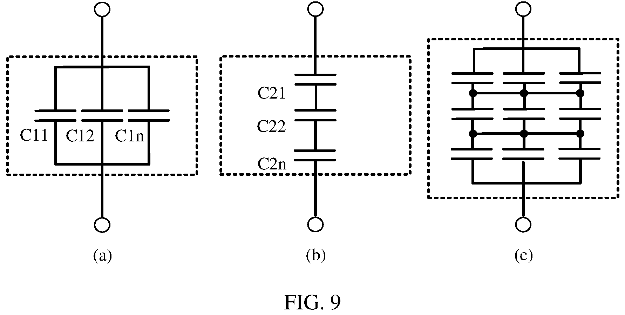

FIG. 9 is a schematic of a filter capacitor module circuit according to an embodiment of this application. For example, as shown in (a) in FIG. 9, the filter capacitor module circuit includes a capacitor C11, a capacitor C12, ..., and a capacitor C1n. The capacitor C11 to the capacitor C1n are connected in parallel. Compared with (a) in FIG. 9, (b) in FIG. 9 shows that a capacitor C11 to a capacitor C1n are connected in series, and (c) in FIG. 9 shows a combination of a plurality of capacitors connected in series and connected in parallel.

In this way, a plurality of capacitors are connected in combination, so that effect of absorbing the voltage peak of a switching transistor can be improved.

It should be understood that the filter capacitor module circuit is merely an example topology. The filter capacitor module in this application may alternatively be in another circuit topology form. This is not limited in this application.

In some embodiments, a quantity of the plurality of filter capacitor modules is one more than a quantity of the plurality of inverter leg modules, and the plurality of filter capacitor modules and the plurality of inverter leg modules are sequentially alternately disposed in the first direction.

As shown in FIG. 4, the plurality of filter capacitor modules and the plurality of inverter leg modules are sequentially alternately disposed in the first direction. In other words, the plurality of inverter leg modules and the plurality of filter capacitor modules are disposed in the first direction in a sequence of one filter capacitor module, one inverter leg module, one filter capacitor module, and one inverter leg module. In addition, because the quantity of the plurality of filter capacitor modules is one more than the quantity of the plurality of inverter leg modules, filter capacitor modules may be correspondingly disposed on two sides of each inverter leg module. This can improve effect in which the filter capacitor module absorbs a voltage peak generated when the switching transistor in the inverter leg module is rapidly turned off.

Specifically, as shown in FIG. 4, the capacitor 441, the inverter leg module 410, and the capacitor 442 are sequentially alternately disposed in the first direction. In a circuit connection of the circuit board 400, the capacitor 441 is connected in parallel to the inverter leg module 410, and the capacitor 442 is connected in parallel to the inverter leg module 410. In other words, the capacitor 441 and the capacitor 442 are correspondingly connected to the inverter leg module 410.

In this embodiment of this application, the filter capacitor module includes a first capacitor unit, and the inverter leg module includes two first switching transistors and two second switching transistors. First capacitor units of the plurality of filter capacitor modules are distributed at an equal spacing along a first distribution straight line in the first direction. The two first switching transistors in the inverter leg module and first capacitor units in two adjacent filter capacitor modules are distributed at an equal spacing in the first direction, and the two second switching transistors in the inverter leg module and first capacitor units in the two adjacent filter capacitor modules are distributed at an equal spacing in the first direction. The two first switching transistors and the two second switching transistors are symmetrically distributed along the first distribution straight line.

As shown in FIG. 4, the capacitor 441, the capacitor 442, the capacitor 443, or the capacitor 444 may be used as a capacitor unit. The capacitor 441, the capacitor 442, the capacitor 443, and the capacitor 444 are disposed at an equal spacing along the first distribution straight line in the first direction.

In other words, distances between two adjacent capacitors are the same. For example, a distance between the capacitor 441 and the capacitor 442 is the same as a distance between the capacitor 442 and the capacitor 443. In addition, as shown in FIG. 4, the capacitor 441, the capacitor 442, the capacitor 443, and the capacitor 444 each are all disposed on the first distribution straight line. The capacitor is disposed on the first distribution straight line, that is, the first distribution straight line passes through a partial region of each capacitor.

The inverter leg module 410 includes a switching transistor 411, a switching transistor 412, a switching transistor 413, and a switching transistor 414. It should be understood that a manner of disposing the switching transistor 411 to the switching transistor 414 is not limited in embodiments of this application. For example, the switching transistor 411 to the switching transistor 414 may be sequentially arranged in the first direction, and pins of the switching transistor 411 to the switching transistor 414 may be disposed in any direction.

Specifically, the switching transistor 411 and the switching transistor 412 in the inverter leg module 410 and first capacitor units in two adjacent filter capacitor modules, that is, the capacitor 441 and the capacitor 442 are distributed at an equal spacing in the first direction, and the switching transistor 413 and the switching transistor 414 of the inverter leg module 410 and first capacitor units in the two adjacent filter capacitor modules, that is, the capacitor 441 and the capacitor 442 are distributed at an equal spacing in the first direction.

In this way, the first capacitor units in the plurality of filter capacitor modules are distributed at an equal spacing, and some switching transistors in the inverter leg module and the first capacitor units in the two adjacent filter capacitor modules are distributed at an equal spacing, so that the two adjacent filter capacitor modules can provide same decoupling effect for the inverter leg module.

It should be understood that the switching transistor 411 and the switching transistor 412 and the adjacent capacitor 441 and capacitor 442 are distributed at an equal spacing in the first direction. It may be considered that the switching transistor 411 and the switching transistor 412 are disposed in the middle of the left and right adjacent capacitor 441 and capacitor 442.

The switching transistor 411 and the switching transistor 412 are symmetrically distributed with the switching transistor 413 and the switching transistor 414 along the first distribution straight line.

In this way, some switching transistors in the inverter leg module and the other switching transistors are symmetrically distributed along the distribution straight line of the plurality of filter capacitor modules, so that space occupied by the plurality of switching transistors in the inverter leg module in the first direction can be reduced, trace distances between the two adjacent filter capacitor modules and the plurality of switching transistors in the inverter leg module can be shorter, parasitic inductance on the trace between the switching transistors in the inverter leg module and the corresponding filter capacitor modules can be reduced, thereby improving effect of absorbing a voltage peak from the switching transistor in the inverter leg module.

Optionally, a distance between two adjacent capacitors may be less than a first threshold, so that the capacitor 441 and the capacitor 442 are close to the switching transistor 411 and the switching transistor 412. It should be understood that the first threshold may be set based on factors such as experimental data, a working condition environment, and a safety requirement. It should be understood that a manner of determining the first threshold and a specific value setting are not limited in this application.

For example, if the first threshold is 55 millimeters, the distance between the capacitor 441 and the capacitor 442 may be 54 millimeters, and when the distance between the switching transistor 411 and the switching transistor 412 in the inverter leg module 410 that are placed in the first direction is 50 millimeters, in the first direction, a distance between the capacitor 441 and the switching transistor 411 and a distance between the capacitor 442 and the switching transistor 412 may be both 2 millimeters.

Optionally, a difference between a distance between two adjacent capacitors and a distance between the plurality of switching transistors that are in the inverter leg module 410 and that are placed in the first direction is less than or equal to a distance between two adjacent switching transistors in the plurality of switching transistors.

In some embodiments, the first threshold is less than or equal to a sum of a minimum distance between the plurality of switching transistors included in the inverter leg module in the first direction and a length occupied by the filter capacitor module in the first direction.

For example, a minimum distance between the plurality of switching transistors included in the inverter leg module 410 in the first direction is 50 millimeters, a length occupied by the filter capacitor module, that is, the capacitor 441, in the first direction is 30 millimeters, and the first threshold may be set to 80 millimeters. In other words, the distance between the capacitor 441 and the capacitor 442 is less than 80 millimeters.

It should be understood that a manner of disposing another inverter leg module in the circuit board 400 is similar to the manner of disposing the inverter leg module 410. Details are not described herein again in this application.

In some embodiments, the first capacitor includes an upper boundary and a lower boundary in the second direction, the upper boundary and the lower boundary of the first capacitor are parallel to the first distribution straight line, at least a part of the inverter leg module is located between extension lines on which the upper boundary and the lower boundary of the first capacitor are respectively located.

As shown in FIG. 4, the capacitor 441 and the capacitor 442 that are adjacent to each other respectively include an upper boundary and a lower boundary in the second direction. Specifically, the upper boundary of the capacitor 441 and the capacitor 442 is located on an upper boundary line, and the lower boundary of the capacitor 441 and the capacitor 442 is located on a lower boundary line. The upper boundary line and the lower boundary line are parallel to the first distribution straight line. At least a part of the inverter leg module 410 is located between the extension lines on which the upper boundary and the lower boundary of the capacitor 441 and the capacitor 442 are respectively located, that is, between the upper boundary line and the lower boundary line in FIG. 4.

In this way, at least a part of the inverter leg module is disposed between the extension lines on which the upper boundary and the lower boundary of the first capacitors of the two filter capacitor modules adjacent to the inverter leg module are respectively located. This can further shorten trace distances between a plurality of switching transistors in the inverter leg module and two adjacent filter capacitor modules.

In some embodiments, each switching transistor in the inverter leg module includes a pin, pins of the two first switching transistors and the two second switching transistors are located between the extension lines on which the upper boundary and the lower boundary of the first capacitor are respectively located.

As shown in FIG. 4, a black circle is used as an example to represent a pin of a capacitor and a pin of a switching transistor in FIG. 4. It should be understood that a shorter distance between a pin of each switching transistor and a corresponding filter capacitor module indicates a smaller parasitic inductance on a trace connected to the pin, and better effect in which the filter capacitor module absorbs the voltage peak of the switching transistor in the inverter leg module.

In this way, the pins of the switching transistors in the inverter leg module are disposed in a specific range between the extension lines on which the upper boundary and the lower boundary of the first capacitors in the two adjacent filter capacitor modules are respectively located, and a trace distance between the switching transistors in the inverter leg module and the filter capacitor module can be further reduced.

In some embodiments, the capacitor in the filter capacitor module includes a first pin and a second pin that are respectively disposed at two ends of the capacitor, and the first pin and the second pin are arranged in the second direction.

As shown in FIG. 4, two pins of the capacitor 441 are respectively disposed above and below the capacitor 441 in the second direction.

Optionally, the two pins of the capacitor 441 are respectively disposed above and below the capacitor 441 in the first direction, that is, disposed on the left side and the right side of the capacitor 441 in the second direction. This is not limited in this application.

It should be understood that, in this embodiment of this application, the two pins of the capacitor are respectively disposed at the two ends of the capacitor in the second direction, and distances between the two pins of the capacitor and the corresponding inverter leg modules are the same, so that a distance between the two pins of the capacitor and the corresponding inverter leg modules can be further reduced.

In some embodiments, the first capacitor unit includes a second capacitor and a third capacitor. The two first switching transistors in the inverter leg module and second capacitors in the two adjacent filter capacitor modules are distributed at an equal spacing in the first direction, and the two second switching transistors in the inverter leg module and third capacitors in the two adjacent filter capacitor modules are distributed at an equal spacing in the first direction. The second capacitor and the third capacitor each include an upper boundary and a lower boundary in a second direction, upper boundaries and lower boundaries of the second capacitor and the third capacitor are parallel to the first distribution straight line, at least a part of the two first switching transistors are located between extension lines on which an upper boundary and a lower boundary of the second capacitor are respectively located, at least a part of the two second switching transistors are located between extension lines on which an upper boundary and a lower boundary of the third capacitor are respectively located, and the first direction is perpendicular to the second direction.

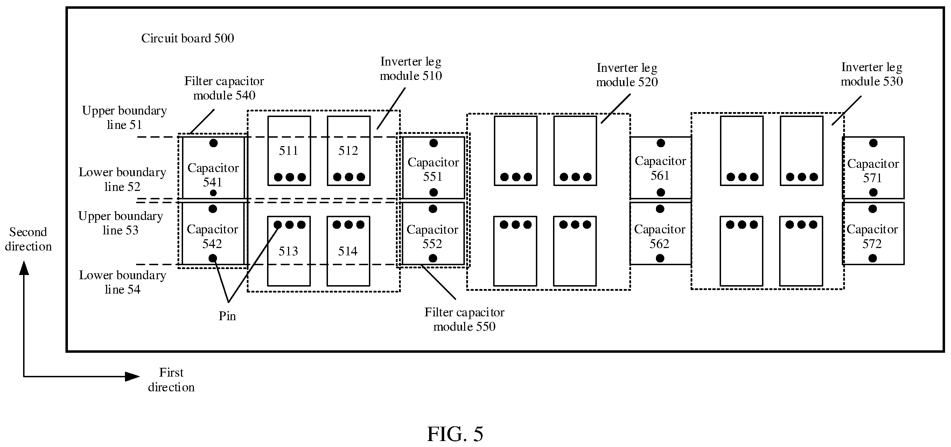

FIG. 5 is a diagram of a layout of a circuit board 500 according to this application. It should be understood that, in this embodiment of this application, only a difference between FIG. 5 and FIG. 4 is described.

As shown in FIG. 5, an inverter leg module 510 is disposed between the filter capacitor module 540 and the filter capacitor module 550, and the inverter leg module 510 includes a switching transistor 511, a switching transistor 512, a switching transistor 513, and a switching transistor 514. The switching transistor 511 and the switching transistor 512 are arranged in a first direction, the switching transistor 511 and the switching transistor 513 are arranged in a second direction, and the switching transistor 512 and the switching transistor 514 are arranged in the second direction.

A first capacitor unit of the filter capacitor module 540 includes a capacitor 541 and a capacitor 542, and a first capacitor unit of the filter capacitor module 550 includes a capacitor 551 and a capacitor 552.

Specifically, the switching transistor 511 and the switching transistor 512 in the inverter leg module 510 and two adjacent filter capacitor modules, that is, the capacitor 541 in the filter capacitor module 540 and the capacitor 551 in the filter capacitor module 550 are distributed at an equal spacing in the first direction, and the switching transistor 513 and the switching transistor 514 in the inverter leg module 510 and the adjacent capacitor 542 and capacitor 552 are distributed at an equal spacing in the first direction.

It should be understood that, in a circuit connection of the circuit board 500, the capacitor 541, the capacitor 542, the capacitor 551 and the capacitor 552 are connected in parallel to the inverter leg module 510.

In this embodiment of this application, as shown in FIG. 5, the capacitor 541 and the capacitor 551 that are adjacent to the switching transistor 511 and the switching transistor 512 separately include an upper boundary and a lower boundary in the second direction. Specifically, an upper boundary of the capacitor 541 and the capacitor 551 are located on an upper boundary line 51 of the filter capacitor module 540 and the filter capacitor module 550, and a lower boundary of the capacitor 541 and the capacitor 551 are located on a lower boundary line 52. An upper boundary of the capacitor 542 and the capacitor 552 is located on an upper boundary line 53, and a lower boundary of the capacitor 542 and the capacitor 552 is located on a lower boundary line 54 of the filter capacitor module 540 and the filter capacitor module 550. The upper boundary line and the lower boundary line of the capacitor 541 and the capacitor 551, and the upper boundary line and the lower boundary line of the capacitor 542 and the capacitor 552 are parallel to a first distribution straight line.

Specifically, at least a part of the switching transistor 511 and the switching transistor 512 in the inverter leg module 510 are located between extension lines on which the upper boundary and the lower boundary of the capacitor 541 and the capacitor 551 are respectively located, that is, between the upper boundary line 51 and the lower boundary line 52 in FIG. 5. At least a part of the switching transistor 513 and the switching transistor 514 in the inverter leg module 410 are located between extension lines on which the upper boundary and the lower boundary of the capacitor 542 and the capacitor 552 are respectively located, that is, between the upper boundary line 53 and the lower boundary line 54 in FIG. 5.

Optionally, pins of the switching transistor 511 and the switching transistor 512 in the inverter leg module 510 are located between the upper boundary and the lower boundary of the capacitor 541 and the capacitor 551, that is, between the upper boundary line 51 and the lower boundary line 52 in FIG. 5. Pins of the switching transistor 513 and the switching transistor 514 in the inverter leg module 410 are located between the upper boundary and the lower boundary of the capacitor 542 and the capacitor 552, that is, between the upper boundary line 53 and the lower boundary line 54 in FIG. 5.

In this way, for two groups of switching transistors that are symmetrically distributed along the first distribution straight line in the inverter leg module, at least a part of one group of switching transistors is confined between extension lines on which the upper boundary and the lower boundary of the second capacitor are respectively located, and at least a part of the other group of switching transistors is limited between the extension lines on which the upper boundary and the lower boundary of the third capacitor are respectively located, so that a trace distance between the switching transistors in the inverter leg module and the corresponding capacitors can be further reduced.

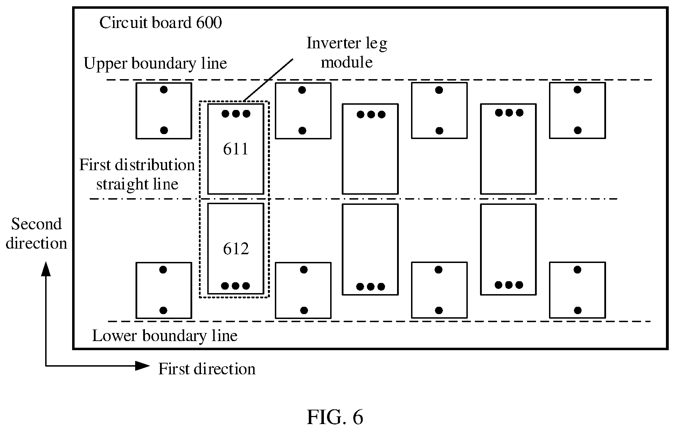

FIG. 6 is a diagram of a layout of a circuit board 600 according to this application.

As shown in FIG. 6, compared with the layout of the circuit board 500 in the embodiment in FIG. 5, the pin of the switching transistor in this embodiment of this application may be disposed at different locations in the switching transistor.

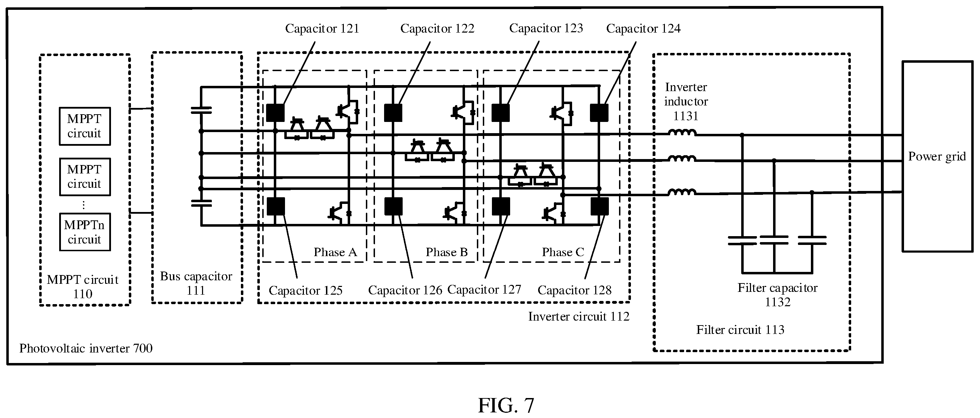

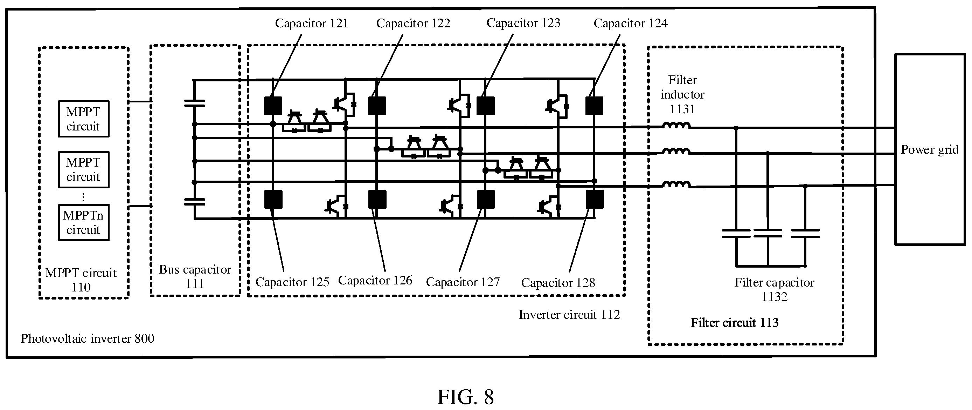

The following uses an example in which an inverter is used as a photovoltaic inverter to describe, with reference to FIG. 7 and FIG. 8, a possible circuit connection manner between a leg and a filter in the inverter provided in this embodiment of this application. It should be understood that the inverter provided in this application may include a two-level converter, a three-level converter, and the like.

FIG. 7 is a schematic of a circuit of a photovoltaic inverter according to this application.

As shown in FIG. 7, the photovoltaic inverter 700 includes at least one maximum power point tracking (maximum power point tracking, MPPT) circuit 110, a bus capacitor 111, an inverter circuit 112, and a filter circuit 113.

The at least one MPPT circuit 110 is configured to connect to a plurality of photovoltaic modules (not shown in the figure), and is configured to adjust output voltages of the photovoltaic modules, to track maximum power operating points of the plurality of photovoltaic modules during normal operation. Specifically, an output end of the at least one MPPT circuit is connected to an input port of the bus capacitor 111, an output port of the bus capacitor 111 is connected to an input port of the inverter circuit 112, the inverter circuit 112 is configured to convert a direct current into an alternating current, an output port of the inverter circuit 112 is connected to an input port of the filter circuit 113, and an output port of the filter circuit 113 is configured to connect to an alternating current power grid. Optionally, the filter circuit 113 further includes an inverter inductor 1131 and a filter capacitor 1132. Optionally, the filter circuit 113 may further include a tunable filter whose filter parameter is adjustable, to cope with a changed output frequency and equivalent impedance.

The inverter circuit 112 includes a three-phase leg circuit (a phase-A circuit, a phase-B circuit, and a phase-C circuit). An input port of the inverter circuit 112 is connected to a direct current bus. A bus capacitor 111 is connected in series between a positive bus and a negative bus of the direct current bus. The bus capacitor 111 includes a positive bus capacitor and a negative bus capacitor. After passing through the phase-A circuit, the phase-B circuit, and the phase-C circuit, currents are separately output through the filter circuit 113. The currents output by the phase-A circuit, the phase-B circuit, and the phase-C circuit are input into the power grid after passing through the filter circuit 113. Each phase circuit includes an upper leg, a lower leg, and a bypass branch, and the inverter leg module includes a plurality of switching transistors. In this application, the switching transistor is turned on or turned off based on a drive signal input into the switching transistor, so that the inverter circuit 112 can output different levels in one periodicity. When a power input is a positive value, the inverter circuit 112 may output a positive voltage level; or when a power input is a negative value, the inverter circuit 112 may output a negative voltage level. It should be understood that a quantity of the plurality of switching transistors is not limited in embodiments of this application. For example, each switching transistor shown in FIG. 7 is in a plurality of switching transistors connected in parallel.

Specifically, an inverter circuit module forms the inverter circuit 112 through a trace on a PCB, and the inverter circuit module includes a plurality of inverter leg modules and a plurality of filter capacitor modules. As shown in FIG. 7, for example, a capacitor 121 and a capacitor 122 may form a filter capacitor module. The capacitor 121 and a capacitor 125, the capacitor 122 and a capacitor 126, ..., and the capacitor 124 and a capacitor 128 are alternately arranged with the inverter leg modules of the phase A, the phase B, and the phase C respectively, and are connected in parallel to two ends of the bus capacitor 111.

A photovoltaic inverter provided in FIG. 8 shows a topology structure of another inverter circuit 112. It should be noted that a connection relationship between electronic elements in the inverter circuit is not limited herein in this application. Any electronic element connection manner that can convert a direct current voltage into an alternating current voltage is applicable to the inverter provided in this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An inverter, wherein the inverter comprises an inverter circuit module and a printed circuit board PCB, the inverter circuit module forms an inverter circuit through a trace on the PCB, a first end of the inverter circuit is configured to connect to a direct current power supply, and a second end of the inverter circuit is configured to connect to an alternating current power grid and/or a load;
the inverter circuit module comprises a plurality of inverter leg modules and a plurality of filter capacitor modules, the inverter leg module comprises at least four switching transistors, and the filter capacitor module comprises at least one capacitor; and
the plurality of filter capacitor modules are sequentially disposed on the PCB in a first direction, and at least one inverter leg module is disposed between any two filter capacitor modules.

2. The inverter according to claim 1, wherein a quantity of the plurality of filter capacitor modules is one greater than a quantity of the plurality of inverter leg modules, and the plurality of filter capacitor modules and the plurality of inverter leg modules are sequentially alternately disposed in the first direction.

3. The inverter according to claim 1 or 2, wherein the filter capacitor module comprises a first capacitor unit, and the inverter leg module comprises two first switching transistors and two second switching transistors;
first capacitor units of the plurality of filter capacitor modules are distributed at an equal spacing along a first distribution straight line in the first direction;
the two first switching transistors in the inverter leg module and first capacitor units in two adjacent filter capacitor modules are distributed at an equal spacing in the first direction;
the two second switching transistors in the inverter leg module and first capacitor units in the two adjacent filter capacitor modules are distributed at an equal spacing in the first direction; and
the two first switching transistors and the two second switching transistors are symmetrically distributed along the first distribution straight line.

4. The inverter according to claim 3, wherein the first capacitor unit comprises a first capacitor, and the two first switching transistors in the inverter leg module and first capacitors in the two adjacent filter capacitor modules are distributed at an equal spacing in the first direction;
the two second switching transistors in the inverter leg module and the first capacitors in the two adjacent filter capacitor modules are distributed at an equal spacing in the first direction; and
the first capacitor comprises an upper boundary and a lower boundary in a second direction, the upper boundary and the lower boundary of the first capacitor are parallel to the first distribution straight line, at least a part of the inverter leg module is located between extension lines on which the upper boundary and the lower boundary of the first capacitor are respectively located, and the first direction is perpendicular to the second direction.

5. The inverter according to claim 4, wherein each switching transistor in the inverter leg module comprises a pin, pins of the two first switching transistors and the two second switching transistors are located between the extension lines on which the upper boundary and the lower boundary of the first capacitor are respectively located.

6. The inverter according to claim 3, wherein the first capacitor unit comprises a second capacitor and a third capacitor;
the two first switching transistors in the inverter leg module and second capacitors in the two adjacent filter capacitor modules are distributed at an equal spacing in the first direction;
the two second switching transistors in the inverter leg module and third capacitors in the two adjacent filter capacitor modules are distributed at an equal spacing in the first direction; and
the second capacitor and the third capacitor each comprise an upper boundary and a lower boundary in a second direction, upper boundaries and lower boundaries of the second capacitor and the third capacitor are parallel to the first distribution straight line, at least a part of the two first switching transistors are located between extension lines on which an upper boundary and a lower boundary of the second capacitor are respectively located, at least a part of the two second switching transistors are located between extension lines on which an upper boundary and a lower boundary of the third capacitor are respectively located, and the first direction is perpendicular to the second direction.

7. The inverter according to claim 6, wherein each switching transistor in the inverter leg module comprises a pin, pins of the two first switching transistors are located between the extension lines on which the upper boundary and the lower boundary of the second capacitor are respectively located, and pins of the two second switching transistors are located between the extension lines on which the upper boundary and the lower boundary of the third capacitor are respectively located.

8. The inverter according to any one of claims 4 to 7, wherein a capacitor in the filter capacitor module comprises a first pin and a second pin that are respectively disposed at two ends of the capacitor, and the first pin and the second pin are arranged in the second direction.

9. The inverter according to any one of claims 1 to 8, wherein the filter capacitor module comprises a plurality of capacitors, and a connection manner of the plurality of capacitors comprises series connection, parallel connection, or a combination of the series connection and the parallel connection.

10. The inverter according to any one of claims 1 to 9, wherein the capacitor is a film capacitor.
